# EUROPEAN PATENT APPLICATION

(11) **EP 1 145 799 A2**
(43) Date of publication of application: **17.10.2001**
(21) Application number: 01108205.4
(22) Date of filing: 30.03.2001
(51) Int. Cl.: B23P 19/00, B62D 65/14

(54) **Assembly line of automotive assembly products**

(30) Priority: 14.04.2000 JP 2000113635; 17.11.2000 JP 2000351480
(71) Applicant: Autonetworks Technologies, Ltd., Nagoya-shi, Aichi (JP); Sumitomo Wiring Systems, Ltd., Yokkaichi-shi Mie-ken (JP); SUMITOMO ELECTRIC INDUSTRIES, LTD., Osaka-shi, Osaka (JP)
(72) Inventor: Nomura, Yasushi, Minami-ku, Nagoya-shi, Aichi (JP); Suzuki, Toshiaki, Minami-ku, Nagoya-shi, Aichi (JP)
(74) Representative: Kuhnen & Wacker

(57) **Abstract**

Two turntables 41L, 41R that rotate on a perpendicular axis are arranged in parallel along a moving passage; a surface of each of the tables 41L, 41R is divided into three sections; and in trays 61L/ 62L, 63L (61R, 62R, 63R) placed in the sections, respectively, parts "α", "β", and "γ" corresponding to a type of a center cluster W in which the parts are built ("α'", "β'", and "γ'" which are different from the "α", "β", and "γ" in a kind of the parts though they are the same as the "α", "β", and "γ" in the type of the center cluster W) are put. A bar code for specifying the kind of the center cluster W is stuck onto a surface of the center cluster W of the work; the bar code is read by a bar code reader; an output of the bar code reader is input to a rotation driving mechanism of the turntables 41L, 41R to rotate them; and a tray 61L (61R) for parts corresponding to the type of the work W is positioned at a taking-out position.

## Description

### BACKGROUND OF THE INVENTION

### 1. Field of the Invention

The present invention relates to an assembly line of automotive assembly products.

### 2. Description of the Related Art

In an assembly line of automotive assembly products, while a pallet on which an assembly product (work) is mounted is being moved along a transporting passage, parts are sequentially built in the work on its pallet.

In the assembly line of automotive parts as described above, recently, as a work to be assembled, modularized works such as a center cluster and the like built in an instrument panel are increasing greatly.

Regarding production of the car type in which this modularized work is mounted, the number of types of machines rather than the number of its production tends to increase. This is so-called "large item small scale production".

In an assembly line corresponding to "the large item small scale production", a form of "a mixed production type" is adopted.

In the above mixed production type, there is a change of the work to a new type of a machine during operation of the line, and correspondingly parts to be built in the work must be also changed. Therefore, new parts according to the change must be smoothly supplied, and specification of the type and selection of the corresponding parts must be performed without an error.

Particularly, in case that there are many kinds in the type of the machine, or in case that the change of the type is frequently performed, if the foregoing is not performed, an operating rate of the line decrease extremely. Further, if there are errors in specification of the type of the machine (of the parts) and selection of the corresponding parts, it is feared that many rejects are produced. The production of the many rejects also causes a decrease in availability of the line.

### SUMMARY OF THE INVENTION

An object of the invention is, under such the circumstances, in relation to an assembly line of automotive assembly products, to provide a new one corresponding to the mixed production type, and to make a flow of the line smooth without decreasing operating rate.

In order to solve the above problem, according to the invention, the inside of a stocker, in which parts built in a work moving on a transporting passage by a transporting unit are stored, is sectioned; parts corresponding to the type of the work are stocked in each section; the stocker is provided movably; and each section can move between a standby position and a taking-out position of the parts by moving the stocker.

Accordingly, even if the type of the work changes and the parts to be built in change correspondingly, the portion of the stocker where the parts corresponding to the changed type are put can be moved to the taking-out position. Therefore, the parts can correspond to the change of the work type quickly, so that it is not necessary to stop the line.

In case that the stocker moves automatically, working efficiency improves.

In this case, a bar code corresponding to each work type is stuck to the work; the bar code is read and judged by a bar code reader at an assembly starting position of the line to specify the work type; an output signal of the bar code reader is input to said automatic unit of the stocker as a start signal to move the stocker; and a section where parts corresponding to the specified type are put is moved from the standby position to the taking-out position of the parts, and whereby the working efficiency further improves and it is not feared that there are errors in specification of the work type and selection of the corresponding parts.

An assembly line of automotive assembly products according to a first aspect of the invention, comprises:
a transporting unit for transporting a work on a transporting passage; and
a stocker having a plurality of trays each containing parts corresponding to a type of the work,
wherein the stocker defines a stand by position and a taken-out position where the parts are taken out; and
the trays are movable so that at least one of the trays is at the taken-out position.

In a second aspect of the invention, the assembly line according to claim 1, further comprises an automatic mechanism for enabling to move the trays automatically.

In a third aspect of the invention, there is provided the assembly line according to claim 2,
wherein the automatic mechanism having a lift including:
   a lift mechanism for ascending/descending the trays attached to the lift in an up and down direction;
   a lifting passage; and
   a branch passage provided in the middle of the lifting passage, the branch passage leading to the taking-out position of the parts,
each tray can move from the lifting passage to the branch passage; and
each tray moves to the branch passage or returns from the branch passage to the lifting passage at a predetermine timing.

In a fourth aspect of the invention, there is provided the assembly line according to claim 3, wherein
the branch passage has a flat portion and an inclined portion following the flat portion, or has only an inclined portion;
when the trays reach the taken-out position of the parts, the trays face a worker taking out the parts with inclination.

In a fifth aspect of the invention, the assembly line according to claim 2, further comprises a bar code reader for reading a bar code attached to the work and corresponding to each type of the work, the bar code attached to the work,
wherein the bar code reader reads the bar code at an assembly starting position of the assembly line to specify the type of the work, and then output an output signal to the automatic mechanism as a start signal to move the tray; and
the tray, in which the parts corresponding to the specified type of the work are put, moves from the standby position to the taken-out position.

### BREIF DESCRIPTION OF THE DRAWINGS

Fig. 1 is the whole perspective view showing an assembly line according to embodiments of the invention.

Fig. 2 is a plan view of a base of the line.

Fig. 3 is a front view of the base of the line, in which a part is omitted.

Fig. 4 is a diagram showing a pallet used in the line in the embodiments.

Fig. 5 is a diagram showing a connection between cam followers at the bottom surface of the pallet in Fig. 4 and a guide plate of the line.

Fig. 6 is a schematic front view showing a stocker according to a first embodiment, including a partial section.

Fig. 7 is a plan view for showing how to mount parts in the stocker according to the first embodiment.

Fig. 8 is a schematic sectional side view showing a stocker according to a second embodiment.

Fig. 9 is a plan view for showing how to mount parts in the stocker according to the second embodiment.

Fig. 10 is the whole perspective view in a concrete example according to the second embodiment.

Fig. 11 is a perspective view of a lift.

Fig. 12 is a longitudinal sectional view of a branch passage.

Fig. 13 is a transverse cross section of the branch passage.

Fig. 14 is a front view of an outer bracket.

Fig. 15 is a perspective view of a tray.

Fig. 16 is an exploded perspective view of an nipping member of a timing belt.

Fig. 17 is a main portion enlarged vertical section of the surroundings of the nipping member of the timing belt.

### DETAILED DESCRIPTION OF THE PREFERRED EMBODIMENT

Embodiments according to the invention will be described below with reference to drawings. As described above, in the invention, a stocker for built-in parts provided in the middle of a line is sectioned, and parts corresponding to the type of the work are put in each section. Two embodiments on the stocker are adopted.

Firstly, the whole structure of an assembly line common to the two embodiments will be described. A work to be assembled is a center cluster in an instrument panel.

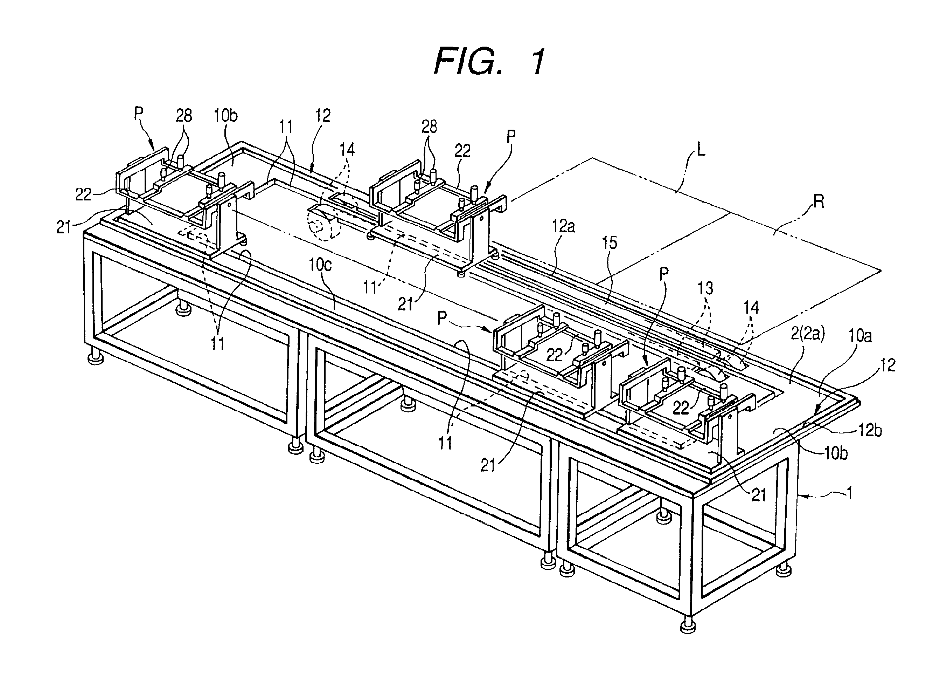

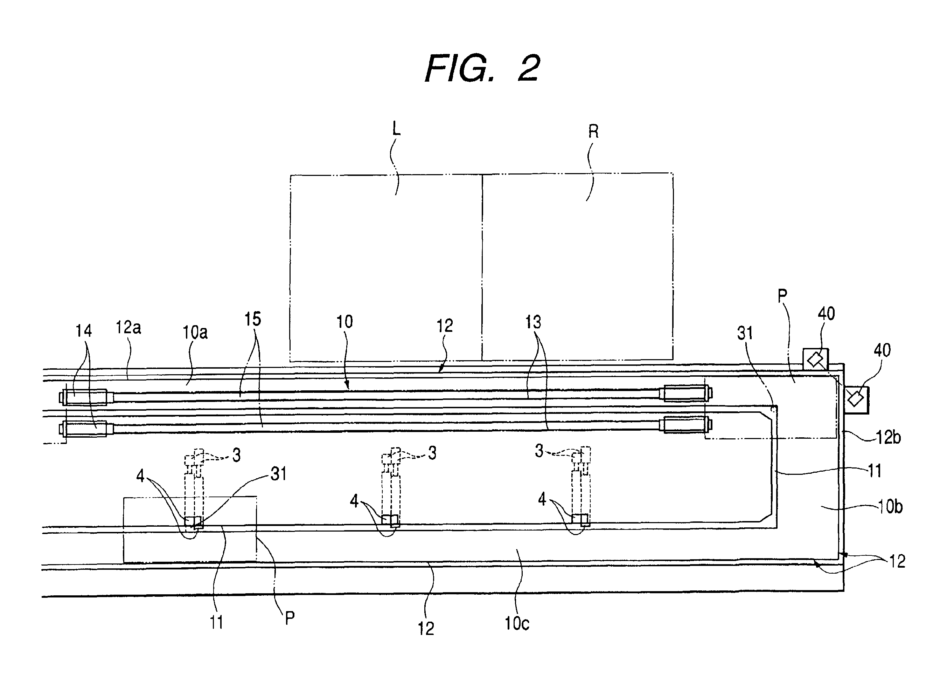

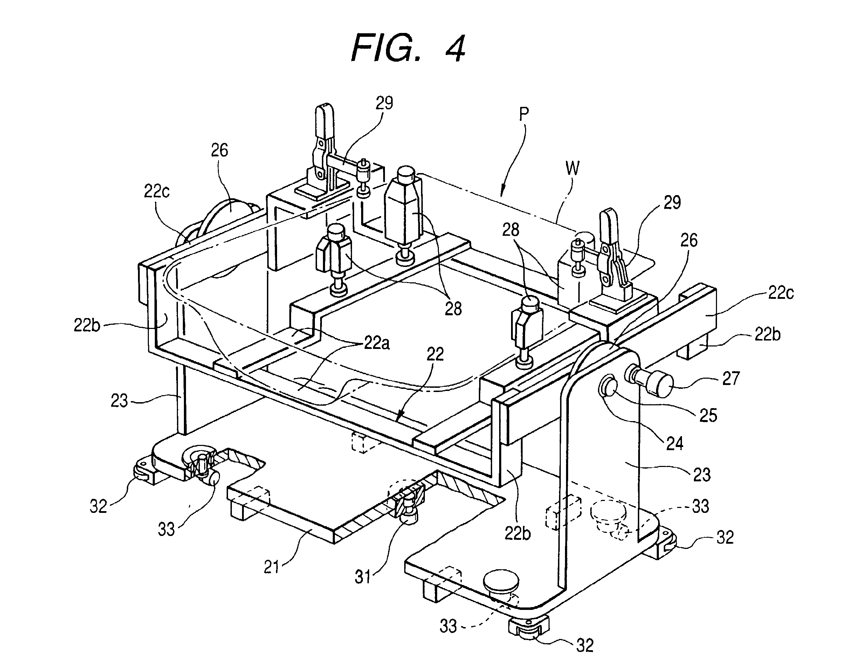

Figs. 1 and 2 show respectively an assembly line of parts to the center cluster W, in which a transporting passage 10, on which a pallet P mounted a work (center cluster) W moves, is formed on an upper surface of a table (2) on a base 1. The transporting passage 10 is provided as a rectangular passage parallel to an outer edge of the base 1, and a guide groove 11 is formed along the center of the width of the transporting passage 10. A cam follower (refer to reference numeral 31 in Fig. 4) described later, which is provided at the pallet P, is fitted to the guide groove 11, and the cam follower comes into contact with a side wall of the guide groove 11 and turns, and whereby the pallet P is guided to the guide groove 11 and moves smoothly.

Further, along the outer edge of the transporting passage 10, that is, along the outer edge of the base 1, a slender belt-like guide plate 12 is provided on the upper surface of the table. Another cam follower disposed at the pallet P comes into contact with the guide plate 12 to guide the movement of the pallet P.

The transporting passage 10 includes a pair of long passages, of which one (on the lower side in Fig. 2) is a parts built-in passage 10c, and a worker assembles parts in the work W mounted on the pallet P while the pallet P is moving on the built-in passage 10c. The other long passage 10a (on the upper side in Fig. 2) is a moving passage 10a on which the vacant pallet P not mounted the work W thereon moves.

On the other hand, short passages 10b, 10b on both sides are delivery passages 10b for delivering the pallet P from the moving passage 10a to the built-in passage 10c. On the delivery passages 10b, the assembly is not performed and the vacant pallet P is only delivered. The pallet P moves on such the rectangular transporting passage 10 clockwise in the figures.

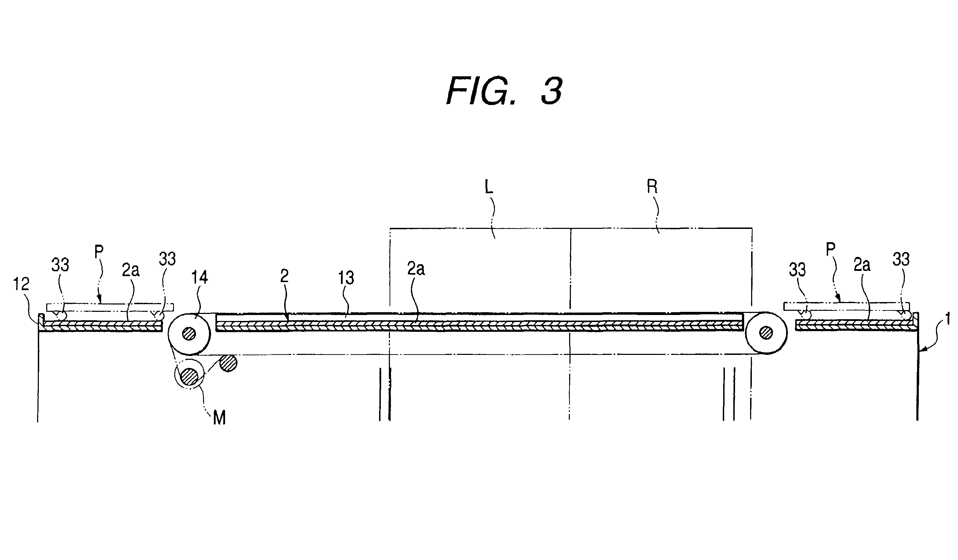

Rails 13 are laid in the transporting passage 10a immediately near the both edges of the guide groove 11 on the upper surface of the table 2 in parallel to the guide groove 11. Timing pulleys 14 are, as shown in Fig. 3, provided at the both ends of each rail 13, and an endless belt 15 wound onto the timing pulleys 14 runs along the upper surface of the rail 13. A motor M for driving the timing pulley 14 is placed on end side of the transporting passage 10a on the lower surface of the table 2. The vacant pallet P is placed on the belt 15 and moves by the belt drive. At each of two regions surrounded with chain lines that are denoted with reference characters L and R, a stocker, that is a main point of the invention, is provided. As described at the beginning, the stocker will be described later and the pallet will be next described.

In the pallet P, as shown in Fig. 4, on both short sides of a rectangular base plate 21 formed of a resin plate, rectangular bearing plates 23 are provided upright so that the plate surfaces are opposed to each other. A rotational shaft 25 is supported through bearings 24, 24 by the both bearing plates 23, 23. A rectangular plate 22 for temporarily fixing the center cluster W is provided at the rotational shaft 25. Further, discs 26 for positioning the plate 22 are attached to the rotational shaft 25, and index plungers 27 cooperating with the discs 26 are provided on side surfaces of the bearing plates 23. In the disk 26, a positioning hole (not shown) corresponding to the index plunger 27 is provided.

Receiving members 28 of the center cluster W are provided at four corners of the rectangular plate 22, and a pair of toggle clumps 29 are provided at positions on the rectangular plate 22, which are opposite to each other in the longitudinal direction of the rectangle plate 22. The center cluster W is placed on the receiving members 28 to be positioned and fixed to the plate 22 by the toggle clumps 29.

After the center cluster W is temporarily fixed to the plate 22, the plate 22 is rotated on the rotational shaft 25 to have the center cluster W take a desired posture, and the center cluster W is fixed with the index plungers 27 to perform a parts built-in operation.

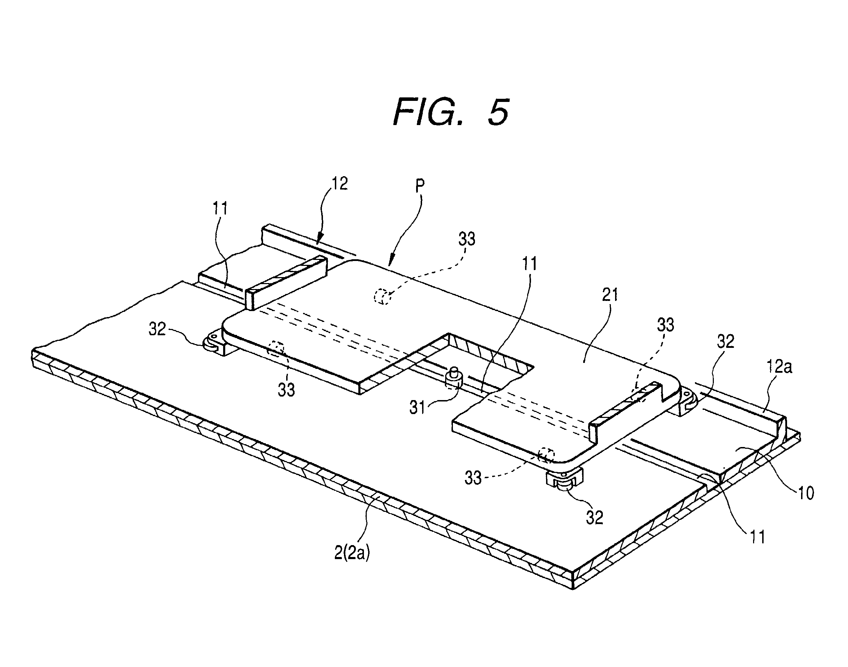

On a bottom surface of the base plate 21, as shown in Fig. 5, cam followers 31, 32, 33 are provided at the center of the base plate 21, at four corners thereof and at four apexes of a rectangle set inside the plate 21, respectively. Among the cam followers, the cam followers 33, which are located at the four apexes of the rectangle inside the pallet, support the pallet P, and the rotational surface of the cam follower 33 can rotate on a vertical axis.

The cam follower 31 in the center and the cam follower 32 at the four corners have the rotational axes in the vertical direction, respectively. When the pallet P moves on the transporting passage 10, as described before, a roller of the center cam follower 31 is fitted into the guide groove 11 and comes into contact with a side wall thereof, and the rollers of the cam followers 32 at the four corners come into contact with the guide plate 12, and the rollers rotates, so that the pallet P moves smoothly.

Further, in the middle of the built-in passage 10c, stoppers 4 that can be moved in a direction orthogonal to the built-in passage 10c by air cylinders 3 are provided on the lower surface of the table 2 as shown in Fig. 2. By the stopper 4, the cam follower 31 in the center of the bottom surface of the base plate 21 of the pallet P is pressed to fix the pallet P, so that the working can be performed in a stable state.

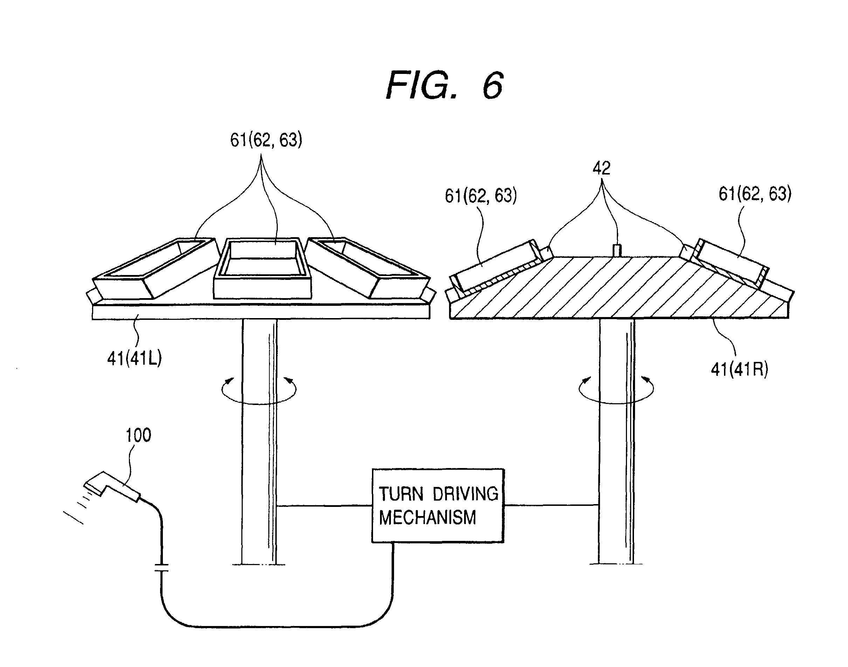

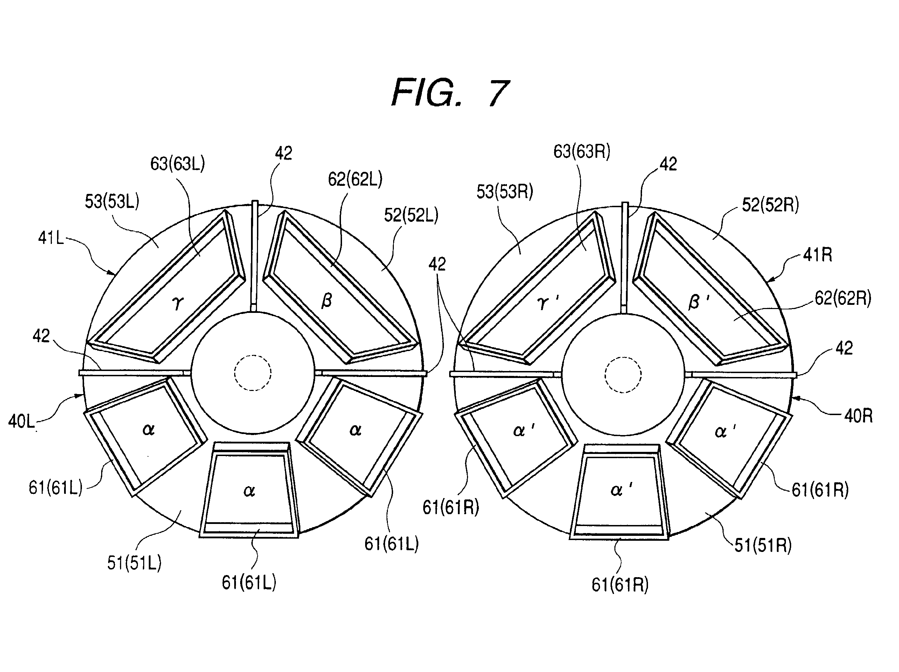

When the vacant pallet P is carried to the end of the moving passage 10a by the belt drive (by the belt 15), the worker draws the pallet P near him using his hands and moves the vacant pallet P to the built-in passage 10c for work. Then, he mounts a new work (center cluster) W on the pallet P and again assembles the parts to the work on the built-in passage 10c. The parts are taken out of a stocker (denoted by reference numeral 40 in Fig. 6 or reference numeral 70 in Fig. 7) which will be described later.

When the pallet P moves to the end of the built-in passage 10c, the last parts are built in the pallet P, and the built-in operation of all the parts is completed, the worker takes the center cluster W of a finished product out of the pallet P and moves the vacant pallet P to the moving passage 10a. On and after, this working is repeated. The whole of the assembly line except for the portion of the parts stocker has been described above. Next, the parts stocker will be described.

As described before, the arrangement regions of the stockers are shown by chain lines in Figs. 1, 2 and 3 and denoted by reference characters L and R, and the stockers are placed close behind the moving passage 10a.

### (First embodiment)

A stocker 40 according to a first embodiment shown in Figs. 6 and 7 is a turntable type (table 41) that rotates on a vertical axis. The stockers placed at the two regions of L and R in Figs. 1 to 3, which are described before, are the same in a shape. Therefore, only one of the stockers will be described. However, since the stockers are different in parts put therein from each other, in case that it is necessary to distinguish between the right stocker and the left stocker, the left stocker is denoted by L and the right stocker is denoted by R.

A turn drive of the table 41 shown in Fig. 6 is performed by a turn driving mechanism (not shown) (for example, belt, chain drive and the like) provided under the base 1 of the line, and one drive mechanism rotates the two tables 41L and 41R simultaneously. An ON/OFF instruction of the rotation of the table 41 is performed automatically in this embodiment, which will be described later.

As shown in Fig. 7, the surface of the table 41 is, viewed from a top surface, divided into three sections, which comprise a region 51 of 180° and two regions 52, 53 of 90°, by three walls 42, 42 and 42 extending from the center of a circular plate to the circumference of the circle.

As shown in Fig. 6, the surface of each of the regions 51, 52, 53 is an inclined surface that descends from the turn center of the table 41 to the circumferential edge, and trays 61, 62, 63 of parts are placed on the respective inclined surfaces. In each of the trays 61, 62, and 63, parts corresponding to the type of the center cluster W in which the parts are built are put.

For example, as shown in Fig. 7, in the tray 61L of the region 51L of the left stocker 40L, parts α corresponding to an "A" type of the center cluster W are put, in the tray 62L of the region 52L, parts β corresponding to a "B" type thereof are put, and in the tray 63L of the region 53L, parts γ corresponding to a "C" type thereof are put.

On the other hand, also in the tray 61R of the region 51R in the right stocker 40R, parts of the same type as the "A" type of the center cluster W are put. However, they are parts α' of the different kind from the kind of the parts α in the tray 61L of the left stocker 40L.

Similarly, though in the tray 62R of the region 52R, parts corresponding to the "B" type of the center cluster W are put, they are parts β' of the different kind from the kind of the parts β in the left tray 62L. Further, in the tray 63R of the region 53R, where parts γ' are put, of which the kind is different from that of the parts γ of the "C" type of the center cluster W.

In a staring state just before the assembly line starts, the stockers 40L, 40R take the same posture. Namely, in case that there is the tray 61L of the left stocker 40L in a parts taking-out position, there is also the tray 61R of the right stocker 40R in the parts taking-out position. Therefore, the parts taken out of the trays 61L, 61R located in the taking-out position by the worker always correspond to the center cluster W of the same type (in this case, the parts are "α" and "α".).

And, when the table 41L of the left stocker 40L rotates to move the tray 62L to the parts taking-out position of the stocker 40L, the table 41R of the right stocker 40R rotates by the same amount to move the tray 62R to the parts taking-out position of the stocker 40R. In this case, if the worker takes parts out of the respective trays located in the taking-out positions, the parts are "β" and "β'", respectively.

The structure of the stocker 40 in this embodiment has been described above. In this embodiment, in order to perform automatic turn of the table 41 of the stocker 40 more efficiently and not to mistake the type of parts to be taken out, a well-known bar code system id adopted.

Namely, a bar code for specifying the type of the work is stuck onto the center cluster W that is the work, and an output terminal of a bar code reader 90 for reading the bar code is connected to an input terminal of the turn driving mechanism of the turntable 41.

Under such the structure, the worker located most upstream puts the bar code reader 90 on the bar code stuck onto the center cluster W brought from the previous step to specify the type of the center cluster W. Then, the output signal is input to the automatic turn mechanism of the stocker 40, the two stockers 40L and 40R rotate as above described, and the tray 61L, 62L or 63L (61R, 62R or 63R), in which the parts corresponding to the type of the center cluster W are put, comes to the taking-out position.

As described above, in this embodiment, even if the type of the center cluster W, in which parts are built, changes during operation of the line, new parts according to a changed type can be quickly supplied. Therefore, it is not necessary to stop the line.

Further, since the specification of the type and the selection of parts corresponding to the type are performed by the bar code system, the specification of the type is not mistaken even in case of the center clusters W having resemblance in shapes. The stoker 40 is moved (the turntable is rotated) according to the output signal of the bar code reader 90, and the tray 61, 62 or 63, in which parts corresponding to the work of the new type are put, moves to the parts taking-out position. Therefore, also regarding to the selection of parts, the parts can be smoothly taken out without an error.

### (Second embodiment)

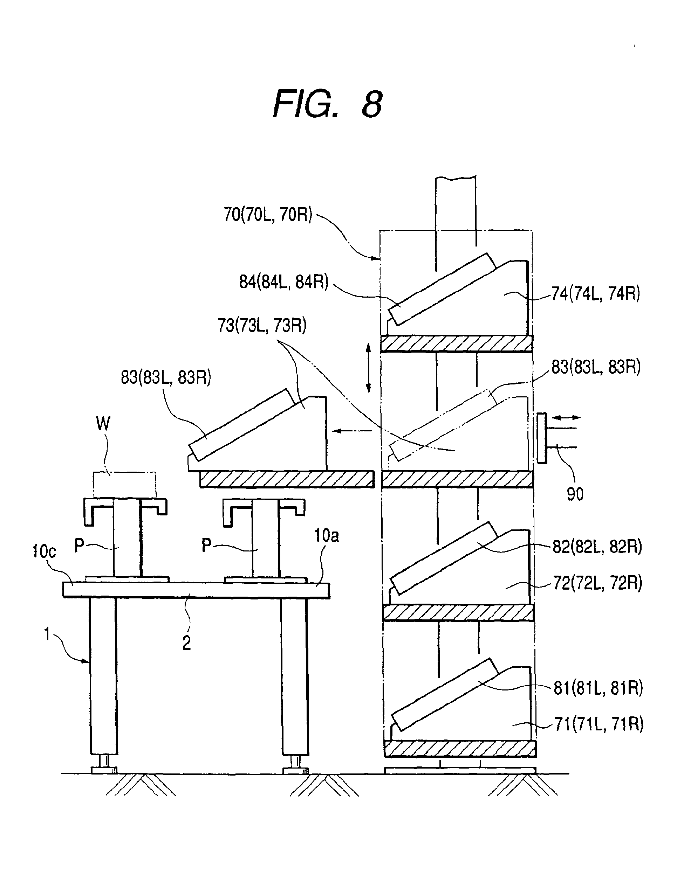

A stocker 7 according to a second embodiment, shown in Fig. 8, is a shelf-like stocker (surrounded with a chain line) comprising four shelves 71, 72, 73, and 74. Similarly to the first embodiment, two stokers are disposed side by side in parallel on the moving passage 10a of the line and are the same in a shape. Therefore, only one stoker will be described. However, since the left and right stockers are different in parts put therein, in case that it is necessary to distinguish between the right stocker and the left stocker, the left stocker is denoted by L and the right stocker is denoted by R.

The whole of the stocker 70 surrounded with the chain line is attached to one lift mechanism not shown, and the left and right stockers (70L, 70R) simultaneously move up and down by the lift mechanism. The lift mechanism has a well-known ball thread and motor, cylinder mechanism, or chain drive mechanism.

In the stoker 70, the four shelves 71, 72, 73, and 74 are provided and each shelf forms an inclined surface. Trays 81, 82, 83 and 84, in which parts corresponding to the type of the center cluster W are put, are detachably placed on the shelves 71, 72, 73, and 74.

Also in case of this embodiment, the left and right trays are placed on the shelves of the same height (the left tray 81L and the right tray 81R are placed on the shelf 71, the left tray 82L and the right tray 82R are on the shelf 72, the left tray 83L and the right tray 83R are on the shelf 73, and the left tray 84L and the right tray 84R are on the shelf 74). Parts corresponding to the same type of the center cluster W, in which the parts are built, are put in the left and right trays, respectively. Though the type of the center cluster is the same, the "kind" of the parts is different between the left tray (81L, 82L, 83L, 84L) and the right tray (81R, 82R, 83R, 84R) .

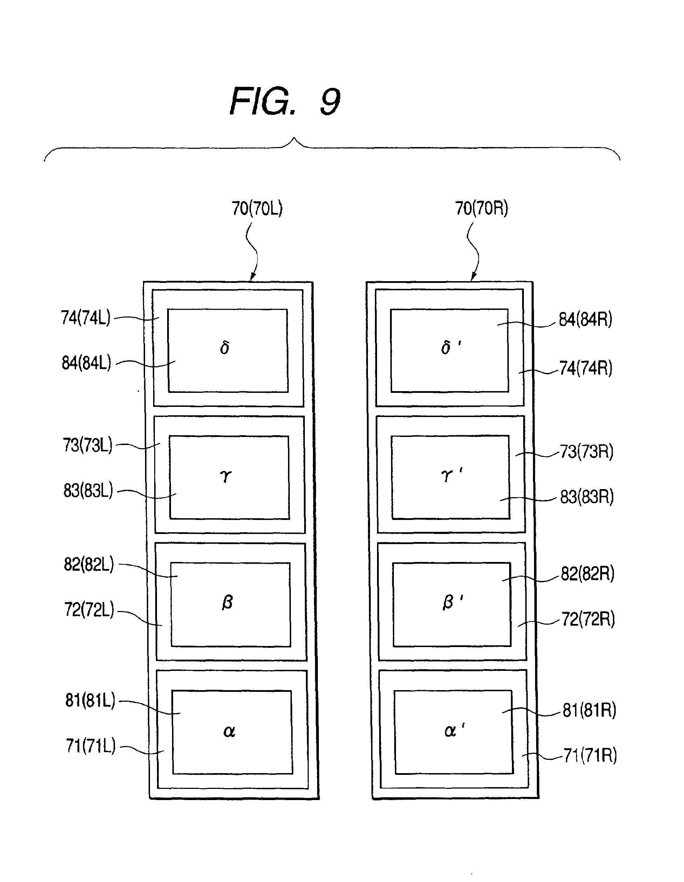

For example, as shown in a schematic diagram of Fig. 9, in the tray 81L of the shelf 71L of the left stocker 70L, parts α corresponding to an "A" type of the center cluster W are put, in the tray 82L of the shelf 72L, parts β corresponding to a "B" type of the center cluster W are put, in the tray 83L of the shelf 73L, parts γ corresponding to a "C" type thereof are put, and in the tray 84L of the shelf 74L, parts δ corresponding to a "D" type thereof are put. Therefore, in the tray 81R of the shelf 71R in the right stocker 70R, parts of the same type as the "A" type of the center cluster W are also put. However, they are parts α' of the different kind from the kind of the parts α in the tray 81L of the shelf 71L of the left stocker 70L.

Similarly, parts "β'" of the different "kind" from the "kind" of the parts β corresponding to the "B" type of the center cluster W are put in the tray 82R; parts "γ'" of the different "kind" from the "kind" of the parts "γ" of the "C" type of the center cluster W are put in the tray 83R; and parts "δ'" of the different "kind" from the "kind" of the parts "δ" of the "D" type of the center cluster W are put in the tray 84R.

Each of the shelves 71, 72, 73 and 74 can ascend and descend, can slide forward and backward (in a direction crossing the line) along a guide not shown, and is pushed out forward by a press mechanism 80 provided in the rear of the stocker 70. As a drive mechanism of the press, there are a ball thread and motor, cylinder mechanism, and the like.

For example, as shown in the figure, when the parts in the tray denoted by reference numeral 83 are required, by automatic mechanism which will be described next, the tray 83 is located in the height where the parts are taken out by the lift mechanism, and simultaneously the tray 83 is pushed out by the press mechanism 80 moving in front and in rear thereby to come on a worker side, whereby he takes the parts out of the tray 83.

Similarly, when the parts in the tray denoted by reference numeral 81 are required, the tray 83 retreats and the stocker 70 ascends and descends again, whereby the tray 81 is located in a height where the parts are taken out. Then, the tray 81 is pushed out again by the press mechanism 80 to come on the worker side.

Also in this embodiment, a bar code stuck to the center cluster W is read by a bar code reader 90 and an output signal therefrom is input to the automatic mechanism, and whereby the movements of the trays 81, 82, 83, 84 (ascent and descent, and advance and retreat of the shelves) are started.

In the above two embodiments, the stockers 40 and 70 are operated by the bar code system. Though there is fear of bad working efficiency and an error in selection of the section or the shelf of the stockers 40, 70, the worker may judge the type of the center cluster W and input a start signal with an usual push button switch to operate the stockers 40 and 70. Further, the operation of the stockers 40, 70 itself may be performed manually. For example, the rotation of the table 41 in case of the stocker 40 according to the first embodiment may be performed manually.

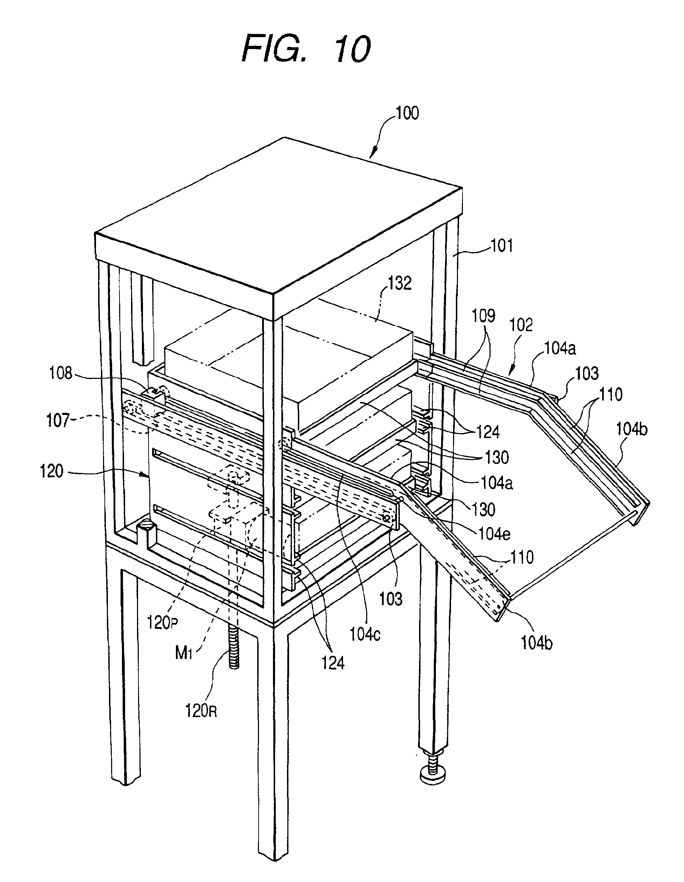

Next, a concrete example of the above second embodiment will be described. In this example, stockers 100 shown in Fig. 10 are placed, respectively, in the two regions denoted by reference characters L and R in the assembly line in Figs. 1 to 3. Since the structure other than the stocker 100 is the same as the foregoing, the same portions are denoted by the same reference numerals and their description are omitted.

As shown in Fig. 10, in the stocker 100, a main frame 101 is formed by assembling aluminum square bars in a shape of a longitudinal rectangle, and the stocker 100 is uprightly disposed in the rear of the assembly line with a longitudinal direction of the main frame 101 made perpendicular. Inside of the main frame 101, a lift 120 driven by a rack 120_{R} and a pinion 120_{P} is provided, and a reference character M₁ is a motor for driving the rack 120_{R} and the pinion 120_{P}. Three trays 130 are attached to the lift 120 to ascend and descend. Further, in the vicinity of the center in the height direction of a front surface of the main frame 101, a branch passage 102 through which the tray 130 in the lift 120 proceeds out of the main frame 101 to reach a position, where a worker takes parts out of the tray, is provided so as to project forward. Firstly, the structure of the lift 120 itself except for the tray 130 will be described.

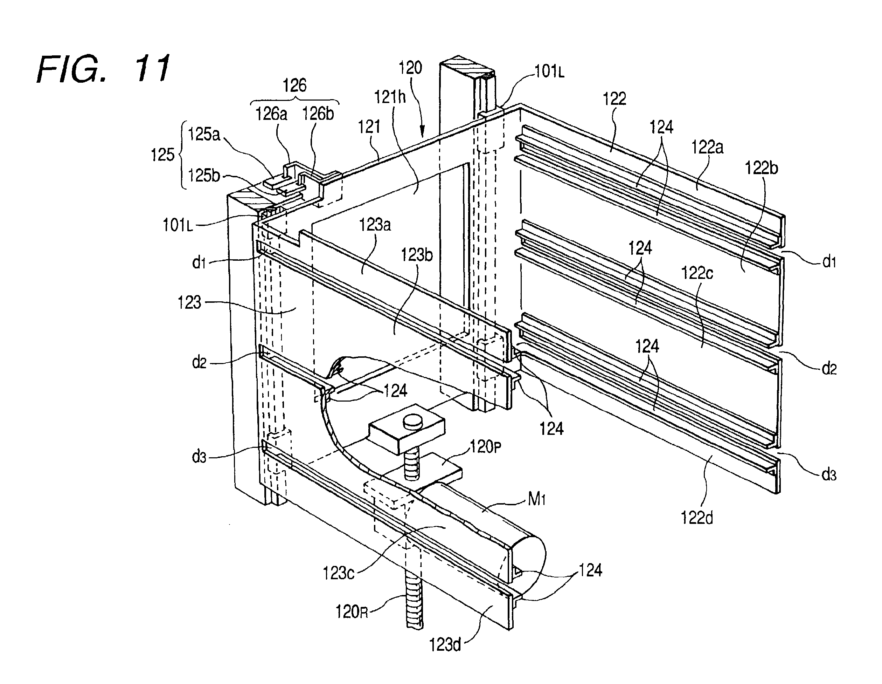

The lift 120 is, as shown in Fig. 11, composed of three surfaces that are a back surface 121 and left and right side surfaces 122,123, and has a U-shaped section. The back surface 121 is formed of a steel plate, and an opening 121h from which the tray 130 is taken out is provided at the center of the back surface 121. Further, the back surface 121 is mounted through linear guides 101_{L} to longitudinal members attached to the main frame 101 and can slide up and down.

Each of a left side surface 122 and a right side surface 123 is composed of four steel plates (122a, 122b, 122c, 122d, and 123a, 123b, 123c, 123d) arranged in parallel in a vertical direction at a predetermined distance. Regarding the left and right four side plates, though the middle two plates 122b, 122c (123b, 123c) are higher (wider) than the other plates 122a, 122d (123a, 123d) putting the middle two plates therebetween, the four plates are the same in length. The left side plates and the right side plates are symmetrical and constitutions are the same in relation to the left side plates and the right side plates. Therefore, only the right side plates will be described below.

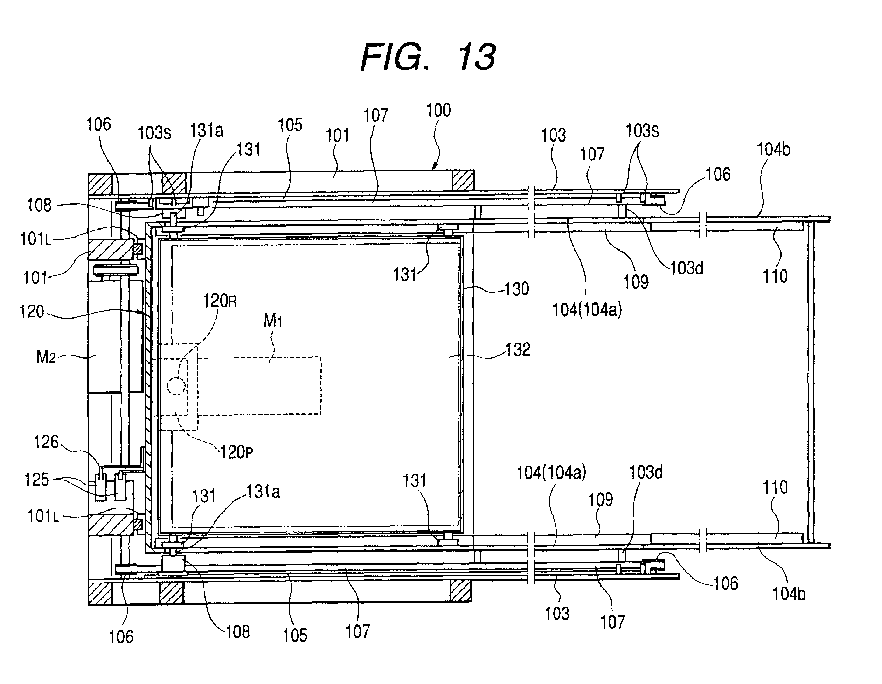

The gaps d₁, d₂, d₃ between the adjacent side plates are all the same, and through the gap d₁, d₂, or d₃, an extension part 131a of a wheel 131 of the tray 130, which will be described later, protrudes outward from the lift 120. The extension part is fitted to a moving member (referring to a reference numeral 108 in Figs. 10 and 13) that moves by belt drive of a timing belt.

Each of side plates 122a, 122b, 122c and 122d is bracket of a rail 124 on which the tray 130 run, and the rails 124 formed of a L-shaped steel are screwed to the brackets 122a, 122b, 122c and 122d.

The upper end of the rack 120_{R} is connected to a center of a lower edge of the back surface plate 121, and a lower dead center of the upper end of the rack 120_{R} is located in the vicinity of the center of the main frame 101. The lift 120 ascends and descends in a upper half region of the main frame 101. A photo sensor 125 for detecting a position of the lift 120 is provided at positions of the lower dead center and the upper dead center, and a sensor dog 126 corresponding to the photo sensor is provided at the back surface plate 121 of the lift 120. A photo sensor 125a and a sensor dog 126a are used for acceleration and deceleration to adjust a position of the lift 120, and a photo sensor 125b and a sensor dog 126b are used for detecting a position of the tray. The above is the constitution of the lift 120. Next, the constitution of the branch passage 102, through which the tray 130 housed in the lift 120 moves out of the main frame 101 and reaches the position where the parts are taken out, will be described.

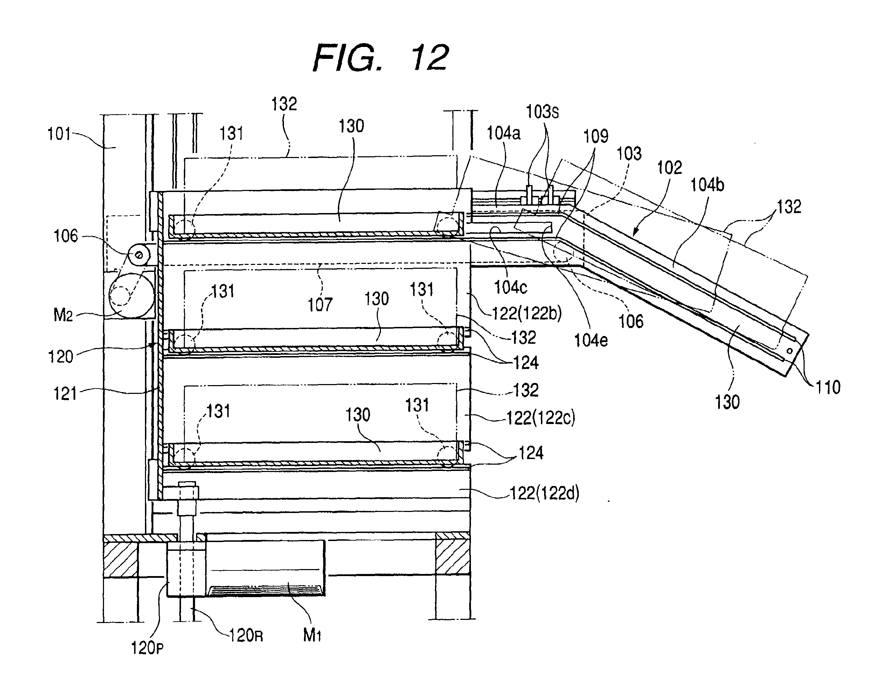

As shown in Figs. 12 and 10, a position in the height direction of the main frame 101, where the branch passage 102 is provided, is at a height where ends of front sides of the top plate 122a (123a) of the four side plates and the plate 122b (123b) just under the plate 122a are located, when the lift 120 is located at the lower dead center. As shown in Fig. 13, brackets 103 provided on the left and right side surfaces of the main frame 101 are protruded horizontally at the height of the main frame 101, and inside the bracket 103, another bracket 104 (hereinafter this bracket is referred to as an inner bracket 104, and the former bracket is referred to as an outer bracket 103) is put side by side through a spacer 103d.

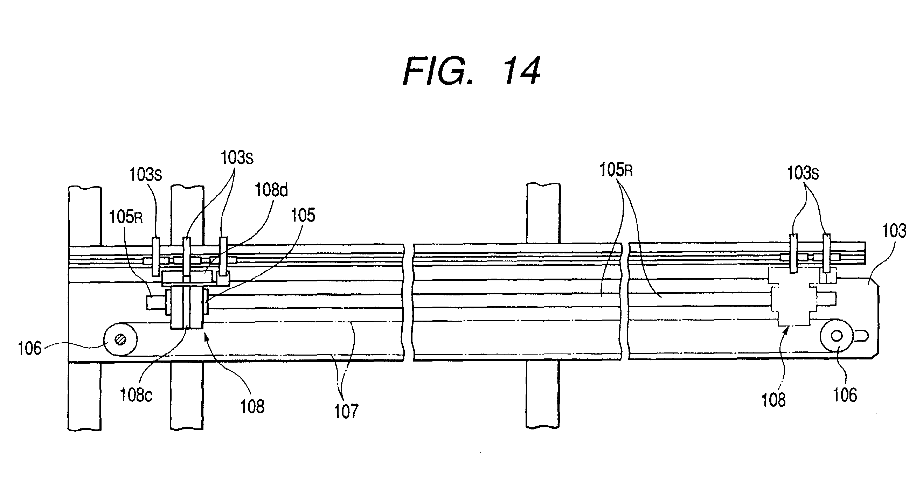

For the outer bracket 103, as shown in Fig. 14, a linear guide 105 is horizontally provided on the upper side of an inner surface of the outer bracket 103. Further, timing pulleys 106 are supported at both ends of the lower side of the inner surface. An endless timing belt 107 is laid on the timing pulleys 106 and is disposed in parallel to a rail 105_{R} of the linear guide 105. Reference character M₂ is a motor for driving a main side of the timing pulley 106 (one on the left side in the figure) .

On the other hand, the inner bracket 104, as shown in Figs. 12 and 13, has the front surface of the main frame 101 (or the front surface of the lift 120) as a starting end, and comprises a horizontal portion 104a that protrudes in a horizontal and forward direction from the main frame 101 to the vicinity of the end portion of the outer bracket 103, and an inclined portion 104b that inclines downward from the end portion of the horizontal portion 104a to a terminal. The inner bracket 104 is in the same plane as the side plates 122, 123 of the lift 120; and a pair of horizontal extension rails 109 is provided at the horizontal portion 104a, following closely the rail 124 of the bracket 122a (123a) of the lift 120. Further, a groove 104c, that connects to one of the gaps d1, d2, and d3, is provided between the extension rails 109 in parallel to the extension rails 109 formed between the side plates 122a and 122b, between the side plates 122b and 122c, and between the side plates 122c and 122d. The groove 104c is used when in the horizontal portion 104a the extension part 131a of the wheel 131 of the tray 130 fits through the groove 104c to the moving member 108 located outside as well as the extension part 131a of the wheel 131 of the tray 130 fits, as described above, through the gap d₁, d₂ or d₃ of the lift 120 to the moving member (refer to reference numeral 108 in Figs. 10 and 13) located outside the lift 120 and driven by the belt drive which will be described later. An end 104e of the groove 104c leads nearly to the vicinity of the end portion of the horizontal portion 104a.

Further, as shown in Fig. 12, at the inclined portion 104b, also, second extension rails 110 that follow closely the extension rails 109 of the horizontal portion 104a are provided. The tray 130 which will be described next runs on such the two extension rails 109, 110 in the branch passage 102 and on the rail 124 provided at the lift 120 to reciprocate between the inside and the outside of the main frame 101.

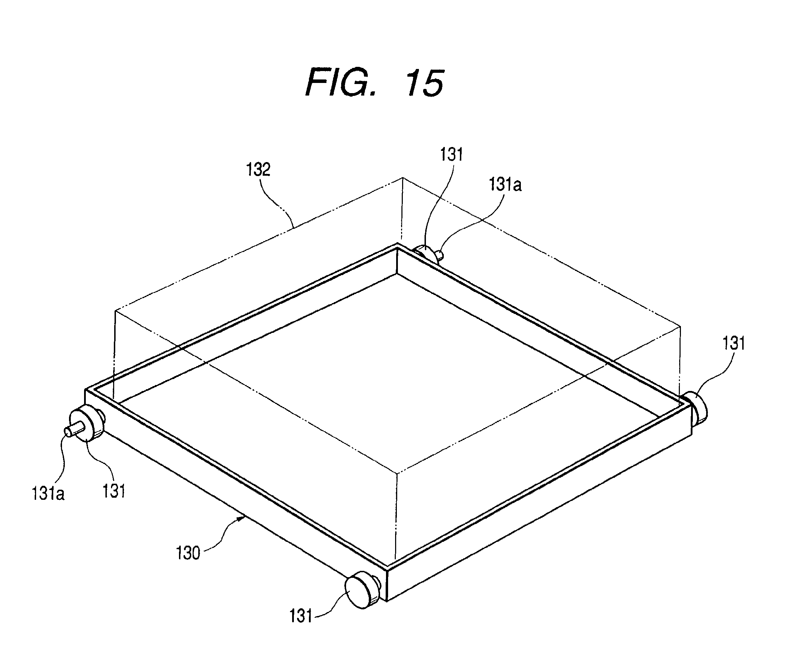

The tray 130 is, as shown in Fig. 15, formed in the shape of a box having an opening at an upper surface thereof, using a steel plate, and the wheels 131 are provided at four corners of side surfaces thereof. In the tray 130, a container 132 in which parts are put exchangeably is mounted. Next, drive mechanism for moving the tray 130 will be described.

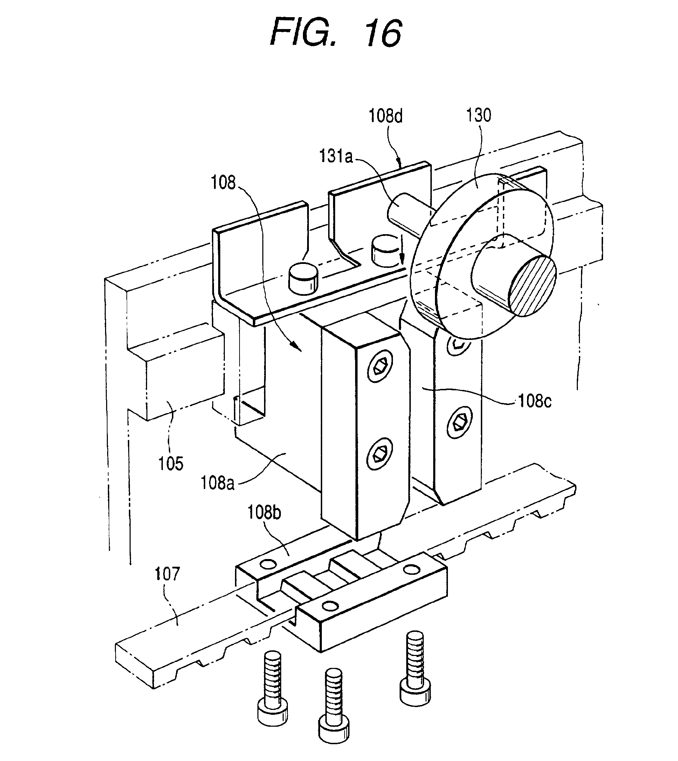

An nipping member 108 (the moving member 108) of the timing belt 107 is attached to the linear guide 105 of the upper portion of the outer bracket 103 shown in Fig. 14. The nipping member 108 is, as shown in Fig. 16, formed in a shape of an approximate rectangle, can be divided into two (upside 108a and downside 108b) in the vertical direction, and nips the timing belt between the divided surfaces.

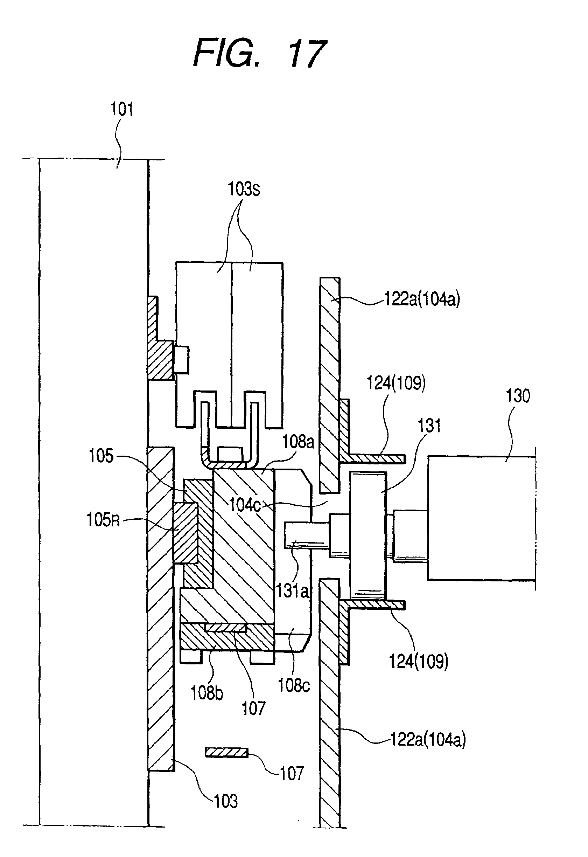

Further, in the center of the inner surface of the nipping member 108, a longitudinal through-groove 108c, to which the extension part 131a of the wheel 131 of the tray fits, is provided. As shown in Fig. 17, the extension part 131a of the wheel protrudes from the inside of the lift 120 to the outside thereof through the gap d₁, d₂, or d₃, between the side plates 122a and 122b of the lift 120, between the side plates 122b and 122c of the lift 120, or between the side plates 122c and 122d of the lift 120 and through the groove 104c of the horizontal portion 104a of the branch portion 102, to fit to the through-groove 108c. Hereby, the timing belt 107 is driven and the tray 130 can move along the rails 124 and 109.

Further, at both ends of one of the left and right outer brackets 103, as shown in Figs. 13 and 14, photo sensors 103_{S} are provided, and a sensor dog 108d corresponding to the photo sensor 103_{S} is attached onto the upper surface of the nipping member 108 of the timing belt 107. By the photo sensors 103_{S} and the sensor dog 108d, whether the tray 130 is housed in the main frame 101 or is going out of the main frame 101 is detected, the region of acceleration and deceleration in the front and rear movement of the tray 130 is specified and the position of the tray is detected. The above is the constitution of the stocker 100 in this embodiment in which the tray 130 moves automatically. Next, the operation of the tray will be described.

Firstly, before the line is operated (in a start state of the line), in the container 132 of each of the tree trays 130 the predetermined quantity of parts for each tray are put, and one of the three trays 130 is located at a height leading to the branch passage 102 . In the figures, as an example, there is shown a state where the lift 120 is located in the lower dead center and the top tray of three trays 130 is situated at the height leading to the branch passage 102. The state will be described below as the start state of the stocker 100.

Before the line is operated or after the line is operated, at least till the pallet, on which the work (center cluster) is mounted, reaches the position of a worker, the timing belt 107 is operated and the tray 130 comes to the position of the worker (parts taking-out position). At this time, the tray 130 moves forward from the start position and moves through the branch passage 102 till the rear wheel 131 of the tray 130 is caught in the end portion 104e of the groove 104c of the horizontal portion 104a of the outer bracket 104.

Regarding the tray 130 which has complete moving, the bottom surface of the tray 130 faces to the worker with an inclination. Therefore, the worker is easy to see the parts in the container 132 and can take the parts out of the container in an easy posture.

During the parts in the first container 132 are being built in the work, when the type of the work is changed to another type, an instruction on the supply of parts corresponding to the changed type is given to the stocker 100 by the bar code system, and the automatic mechanism of the stocker 100 is operated again. At this time, firstly, the timing belt 107 operates in the reverse direction to return the tray 130 into the main frame 101 (the lift 120).

When the first tray 130 returns to the start position, the lift 120 ascends and descends, and the tray 130 of the container 132 in which parts to be next built in are put is located at the height leading to the branch passage 102. When the movement of the lift 120 is completed, the tray 130 is driven by the timing belt 107 in the same manner as the first tray 130 to come to the position of the worker (parts taking-out position).

During that time, another worker who is free goes to the backside of the stocker 100, puts his hand in the stocker 100 from the opening 121h of the back surface plate 121 of the lift 120, takes the container 132, in which the parts have decreased, out of the tray 130, and exchange the container 132 to a container 132 filled with the parts to prepare the next parts supply. Further, he also exchanges the previous container to a container in which the different parts from those in the previous container are put. On and after, by repeating the above operations, the parts are being built in the work.

As described above, according to the invention, the inside of the stocker for the parts is sectioned; the parts corresponding to the type of the work are stocked in each section; the stocker is formed movably; and each section can move between the standby position and the parts taking-out position. Therefore, even if the type of the work is changed and the parts to be built in are changed correspondingly, the portion of the stocker, where the parts corresponding to the type of the changed work are put, can be moved to the taking-out position, so that the parts can correspond to the change of the work type quickly, and whereby it is not necessary to stop the line.

The working efficiency improves by moving the stocker automatically. In this case, the bar code corresponding to each work type is stuck to the work; the bar code is read and judged by the bar code reader at the assembly starting position of the line to specify the work type; the output signal of the bar code reader is input to the automatic unit of the stocker as a start signal to move the stocker; and the section where parts corresponding to the specified type are put is moved from the standby position to the taking-out position of the parts, and whereby the working efficiency further improves and there is no fear that there are errors in specification of the work type and selection of the corresponding parts.

## Claims

1. An assembly line of automotive assembly products comprising:
a transporting unit for transporting a work on a transporting passage; and
a stocker having a plurality of trays each containing parts corresponding to a type of the work,
wherein the stocker defines a stand by position and a taken-out position where the parts are taken out; and
the trays are movable so that at least one of the trays is at the taken-out position.

2. The assembly line according to claim 1, further comprising an automatic mechanism for enabling to move the trays automatically.

3. The assembly line according to claim 2,
wherein the automatic mechanism having a lift including:
a lift mechanism for ascending/descending the trays attached to the lift in an up and down direction;
a lifting passage; and
a branch passage provided in the middle of the lifting passage, the branch passage leading to the taking-out position of the parts,
each tray can move from the lifting passage to the branch passage; and
each tray moves to the branch passage or returns from the branch passage to the lifting passage at a predetermine timing.

4. The assembly line according to claim 3, wherein
the branch passage has a flat portion and an inclined portion following the flat portion, or has only an inclined portion;
when the trays reach the taken-out position of the parts, the trays face a worker taking out the parts with inclination.

5. The assembly line according to claim 2, further comprising a bar code reader for reading a bar code attached to the work and corresponding to each type of the work, the bar code attached to the work,
wherein the bar code reader reads the bar code at an assembly starting position of the assembly line to specify the type of the work, and then output an output signal to the automatic mechanism as a start signal to move the tray; and
the tray, in which the parts corresponding to the specified type of the work are put, moves from the standby position to the taken-out position.
